# EUROPEAN PATENT APPLICATION

(11) **EP 2 590 301 A1**
(43) Date of publication of application: **08.05.2013**
(21) Application number: 11187902.9
(22) Date of filing: 04.11.2011
(51) Int. Cl.: H02K 1/06, H02K 15/16, H02K 15/00, H02K 15/02, F03D 9/00, H02K 15/03, H02K 7/18

(54) **Generator assembly**

(71) Applicant: Siemens Aktiengesellschaft, 80333 München (DE)
(72) Inventor: Stiesdal, Henrik, 5000 Odense C (DK)

(57) **Abstract**

Generator assembly (13), particularly for a wind turbine (1), having a generator (12) with a segmented rotor (4) comprising a number of rotor segments (4') and a segmented stator (5) comprising a number of stator segments (5'), wherein radially oppositely disposed rotor and stator segments (4', 5') each comprise at least one reception portion for detachably receiving at least one connection means, with the connection means being adapted to detachably mechanically connect respective radially oppositely disposed rotor and stator segments (4ʹ, 5ʹ) to build stator-rotor-segment-units (15).

## Description

The invention relates to a generator assembly, particularly for a wind turbine, having a generator with a segmented rotor comprising a number of rotor segments and a segmented stator comprising a number of stator segments.

Due to an increased efficiency and robustness compared with electrical excitation, permanent magnets are being used to an increasing extent in large electric machines such as generators or electric motors for instance. However, some problems concerning the practical application remain unsolved for large direct drive wind turbines (with MW power rating).

A substantial drawback by a directly driven, multipolar generator is its physical dimensions. By an air-gap diameter of ca. 5 m, the outer diameter has a magnitude of ca. 6 m and the dead load becomes essentially increased. The large dead load makes service and/or repair works comparatively complex. Aside, the large outer diameter leads to difficult handling and transportation.

It is to consider that the risk of incurring considerable expenses by a possible replacement of weights of 15 tons or more in 60 - 100 m height may only be performed with very large float cranes or very large mobile cranes placed on large barges. Working with this kind of equipment at the open sea can only be done under good calm weather conditions. Therefore, there may be periods of several months during the winter in which it is not possible to replace a damaged generator, stator, or rotor typically having a weight of ca. 5 tons by 2 MW output. It cannot be avoided that there will be a certain risk of breakdown of the generator.

The dimensions of large-scaled generators have been steadily grown in the past. As mentioned, typical generators may comprise air-gap diameters of ca. 5 m, the outer diameter of the generator may reach up to 6 m. Thus, handling of respective stator or rotor elements is oftentimes problematic due to their dimensions and weight. Aside, generators oftentimes exhibit a critical degree of flexibility and thus can easily become ovally shaped.

Concerning this problem, generators may comprise a respective segmented stator and/or rotor, with the stator being built of several ring-segment-like shaped stator segments and the rotor being built of several ring-segment-like shaped rotor segments. In this manner, erection, maintenance, etc. of the generator maybe essentially facilitated. A typical example of an according generator having a segmented stator comprising respective stator segments is known from WO 00/60719 A1 for instance.

Damages on a generator winding normally arise by an initial flashover at one locality, e.g. due to accidental isolation damages, humidity, or the like. Due to the great amounts of energy released by a burning off, the damage, however, typically causes more general effects on the whole winding in a standard generator. Large parts of the winding may be damaged by melting, by other thermal effects, and by soothing up. In the modular or segmented constructed generator, however, the damage is usually limited to a segment in which the initial flashover has occurred. Thus, it is not necessary that the whole winding has to be dismantled as the repair may be limited to the respective segment.

By the handling itself essential advantages may be achieved. Each single segment will have a weight less than the complete generator and also much less than the weight of a normal gearbox or a normal generator. By a directly driven, multipolar generator with a weight of 20 tons, the segments may conveniently be made in a number so that each segment has a weight of ca. 500 kg. By a weight of this magnitude, the segments may be replaced singularly by a few fitters by means of a small crane which advantageously may be built in the nacelle of a wind turbine.

This construction is especially of importance where large wind turbines are erected at the sea. The very large floating cranes on large barges necessary for repair works on known transmission systems, whether these are conventional with gearbox and a standard generator, or with a directly driven, multipolar generator, may be completely avoided. The only condition for repair is that it is possible to get service personnel on the wind turbine. Replaced generator segments may be lowered by a small built-in crane and they may be sailed to and from the wind turbine on a normal service boat. A number of generator segments may even be stored in the nacelle of the wind turbine as spare parts, whereby lowering and sea transport may be postponed until periods with favourable weather conditions.

By making the generator in a shaft mounted version where the torque is absorbed at specific points by moment supports, it is possible to achieve that the stator of the generator may be turned to the most optimal position by repair works.

Installing and dismantling of segments may occur at one definite position irrespectively of where each segment is disposed on the generator when the generator is in its normal operative position. For example, the stator of the generator may be turned so that the segment intended to be replaced turns downward and therefore may immediately be lowered through a hatch or the like at the bottom of the nacelle of the wind turbine.

Nevertheless, problems may arise when ring segments or parts of these have to be removed and the stator and/or rotor is incomplete. The air-gap between the rotor and the stator is usually only a few millimetres, whereas the generator weighs several tons. In this condition, magnetic forces of the constant magnets and the weight of the rotor and stator itself can cause structural stresses and an uneven force distribution within the generator leading to deformation which can make a refitting of generator components such as permanent magnets or respective segments difficult or even impossible. Even an unwanted attachment between the rotor and the stator or respective segments is possible resulting in damaging the components.

Thus, problems may arise when respective stator and/or rotor segments have to be installed or replaced. Particularly, when the stator and/or rotor is not complete, i. e. at least one stator or rotor segment has been removed, the dimensions of the air-gap between the rotor and the stator may be hardly held constant due to the weight of the stator or rotor respectively and/or magnetic interactions between the permanent magnets of the rotor and the stator windings. Hence, structural loads may be applied to the generator construction which loads may even lead to mechanical deformation making reassembly of the generator difficult or even impossible.

It is the object of the invention to provide a generator assembly which is improved regarding its assembly and disassembly.

This is inventively achieved by a generator assembly as initially described, wherein radially oppositely disposed rotor and stator segments each comprise at least one reception portion for detachably receiving at least one connection means, with the connection means being adapted to detachably mechanically connect respective radially oppositely disposed rotor and stator segments to build stator-rotor-segment-units.

The present invention is based on the idea to provide a generator assembly, whereby respective stator-rotor-segment-units may be temporarily built, particularly during erection, service, or repair, etc. The respective stator-rotor-segment-units provide a spatially defined mechanical connection of respective stator and rotor segments relative to each other, i. e. the air-gap between the stator and the rotor may be kept constant for instance. The respective stator-rotor-segment-units are comparatively easy to handle, i. e. particularly to mount or demount to or from respective structural components of the generator, i. e. a stator or rotor frame or the like. Likewise, transportation of respective stator-rotor-segment-units is easily feasible.

Aside, the provision of respective stator-rotor-segment-units gives structural stability to the stator and/or rotor or respective stator and/or rotor segments which are not to be replaced or removed, i. e. still connected to respective structural components of the generator. In such a manner, the above mentioned problems concerning structural instabilities of the generator, i. e. the stator and/or rotor, respectively after demounting at least one respective stator or rotor segment may be encountered.

It is possible to move stator segments loosened from a structural component of the generator such as a stator frame with the stator segments being connected to respective radially oppositely disposed rotor segments to a service position preferably located on a lower or upper part of the generator. From this service position respective stator-rotor-segment-units may be easily taken out from the generator or inserted into the generator in a direction parallel to a gravitational force.

In order to build respective stator-rotor-segment-units, the respective stator and/or rotor segments each comprise at least one reception portion adapted to receive an appropriate connection means. The connection means is adapted to detachably or temporarily mechanically connect radially oppositely disposed rotor and stator segments to build respective stator-rotor-segment-units. Particularly, the connection means is able to "internalise" forces expelled to the generator or a respective section of the generator when a rotor and/or stator segment is removed (i.e. a permanent magnet is taken out for replacement, inspection, etc.) Each stator and rotor segment preferably comprises a ring-segment like shape.

The terms "detachably" and "temporarily" indicate that respective radially oppositely disposed stator and rotor segments may be arbitrarily connected to build respective stator-rotor-segment-units when needed. Likewise, respective stator-rotor-segment-units being built of respective radially oppositely disposed stator and rotor segments may be arbitrarily disconnected into respective stator and rotor segments when needed.

Generally, the inventive principle is both applicable for generators with outer stator - inner rotor configuration and outer rotor - inner stator configuration. Preferably, the inventive generator assembly is provided for building generators with an outer rotor - inner stator configuration. The respective generators are preferably used as the power generating unit in direct drive wind turbines. The wind turbine is ready to be used for offshore applications.

Additionally, it is possible that the connection means is adapted to detachably connect a respective stator and/or rotor segment or a respective stator-rotor-segment-unit to a structural component of the generator, with a structural component of the generator comprising at least one respective reception portion for detachably receiving at least one connection means. Hence, respective stator and/or rotor segments and particularly stator-rotor-segment-units may also be detachably or temporarily mechanically connected to respective structural components of the generator by means of the inventive connection means. As mentioned above, a structural component of the generator may be a stator or rotor frame or any other structural component of the generator or the generator nacelle respectively such as a main shaft or central shaft for instance.

According to an exemplary embodiment of the invention, the connection of the radially oppositely disposed rotor and stator segments or the rotor and/or stator segment with a structural component of the generator is provided by a screw fitting.

Thereby, it is preferred that the connection means comprises an at least partially threaded bolt, whereby the reception portion of the rotor and/or stator segment and/or the structural component of the generator is provided by at least one, particularly at least partially threaded, bore adapted to receive the bolt. Hence, the connection of the respective radially oppositely disposed stator and rotor segments, i. e. the provision of a respective stator-rotor-segment-unit may be established by inserting or screwing the bolt through the respective through hole, which may also be provided with an inner thread adapted to engage or engaging the outer thread of the bolt, of the stator or rotor segment into a respective possibly threaded blind bore of the radially oppositely disposed rotor or stator segment. The air-gap extending between the rotor and the stator or respective oppositely disposed rotor and stator segments may be altered or adjusted by means of the screw fitting, i.e. the provision of respective bolts, nuts or the like.

Additionally, as far as both the stator and rotor segments are provided with respective blind bores, the bolt may entirely penetrate a respective stator-rotor-segment-unit and end in a respective blind bore of the structural component of the generator, i. e. a stator or rotor frame for instance. Of course, a respective stator and/or rotor segment may both comprise respective through bores and blind bores.

Generally, the number and disposal of respective reception portions is arbitrary, whereby, according to an exemplary embodiment of the invention, a respective stator and/or rotor segment or structural component of the generator is provided with four reception portions.

It is possible that the bolt penetrates a through bore of the generator or stator segment ending in a threaded blind bore of the respective oppositely disposed stator or rotor segment or the bolt penetrates a through bore of the rotor or stator segment and further penetrates a through bore of the respective oppositely disposed stator or rotor segment ending in a blind bore of the structural component of the generator or the bolt penetrates a through bore of the rotor or stator segment ending in a blind bore of the structural component of the generator.

It is advisable that the connection means further comprises at least one nut adapted to adjust or keep an air gap between the respective radially oppositely disposed stator and rotor segments. The dimensions of the nut, i. e. particularly the height of the nut is preferably adapted to the air-gap between the stator and the rotor, i. e. the height of the nut is regularly adapted to keep the air-gap between the stator and the rotor constant. The nut may be provided on the radial inner and/or outer side of a respective rotor segment and, if need be, additionally on the side facing the rotor, i. e. the radially oppositely disposed rotor segment of a stator segment. Aside, by choosing nuts with different heights, the air-gap may be modified in easy manner. Since nuts serve as spacers between respective radially oppositely disposed stator and rotor segments, respective shim elements may be used instead of or together with respective nuts.

According to another embodiment of the invention, the connection of the radially oppositely disposed rotor and stator segments or the rotor and/or stator segment with a structural component of the generator is provided by a bayonet fitting. Like screw fittings, bayonet fittings may also provide a detachable or temporary connection of two respective connecting members, i. e. respective radially oppositely disposed stator and rotor segments and/or structural components of the generator.

Thereby, it is preferred that the connection means comprises a bolt having at least one radial projection, wherein the reception portion of the rotor and/or stator segment and/or the structural component of the generator comprises a first radial extending section and a second section perpendicularly extending from the first section. Hence, a mechanically stable connection of respective radially oppositely disposed stator and rotor segments or respective stator-rotor-segment-units with a respective structural component of the generator may be accomplished by inserting the bolt in respective reception portions, i. e. the first radially extending section and further turning the bolt to guide the radial projection in the second section of the reception portion. Possibly, spring elements may be provided to firmly hold the bolt within the second section of the reception portion.

It is of advantage that the bolt comprises a connecting portion adapted to be connected with a corresponding connecting portion of a hoisting means. Thus, the respective stator-rotor-segment-units built by the bolt may be lifted by respective external hoisting means such as a crane or the like or by an internal hoisting means, for example in the case of the generator being part of a wind turbine.

Likewise, the connection of the radially oppositely disposed rotor and stator segments may be provided by a form closure fitting.

Thereby, it is preferred that the connection means is provided by a longitudinal component axially extendable or extending in the air-gap between respective radially oppositely disposed rotor and stator segments, with the connection means having at least one radially extending protrusion or recess, whereby the reception portion of the respective rotor and/or stator segments is provided as a corresponding radially extending protrusion and/or recess. In this case, the connection means does not radially, but axially extend between respective radially oppositely disposed stator and rotor segments. Hence, the connection means is to be mounted or demounted from a respective face side of the generator.

The respective radially extending protrusion and recess correspond in shape, whereby a number of different shapes may be provided. Merely as an example, the form closure fitting may be realised by a dove-tail-connection, whereby both the protrusion and the recess have the shape of a dove-tail or the like.

The connection means is preferably made of a non-magnetic or non-magnetisable material. In such a manner, magnetic interactions between the connection means and components of the generator, i. e. particularly the permanent magnets of the rotor, may be inhibited. Hence, the connection means may be easily connected or disconnected with the respective components of the generator, i. e. the stator and/or rotor segments and/or the structural components of the generator. Thus, the connection means is preferably built of a non-ferromagnetic iron-based metal like austenitic steel for instance. Of course, other non-magnetic or non-magnetisable materials are applicable as well. The same applies to respective nuts as far as provided.

Aside, the invention relates to a method for mounting or demounting the stator and/or rotor or parts of the stator and/or rotor of a generator having a segmented rotor comprising a number of rotor segments and a segmented stator comprising a number of stator segments. The method comprises the steps of detachably connecting rotor and stator segments with each other to build a stator-rotor-segment-unit comprising radially oppositely disposed stator and rotor segments outside of the generator, mounting the stator-rotor-segment-unit to the generator, and disconnecting the stator-rotor-segment-unit mounted with the generator, or detachably connecting radially oppositely disposed rotor and stator segments with each other to build a stator-rotor-segment-unit at the generator and demounting the stator-rotor-segment-unit from the generator.

The first alternative of the inventive method relates to mounting of the generator or parts of the generator. Thereby, a respective stator and rotor segment are appropriately aligned and detachably connected with each other to build a respective stator-rotor-segment-unit. The detachable or temporary connection of the stator and rotor segment or the stator-rotor-segment-unit respectively is preferably accomplished by at least one respective connection means as described above. The respective stator-rotor-segment-unit is preferably moved to the respective installation site of the generator by means of a hoisting means for instance. At the installation site, the stator-rotor-segment-unit is mounted to the generator, i. e. a structural component of the generator like a stator frame or rotor frame for instance. The procedure may be repeated several times until mounting of the generator is completed.

The second alternative of the inventive method relates to demounting of a generator or parts of a generator. Thereby, radially oppositely disposed rotor and stator segments are detachably connected with each other to build a stator-rotor-segment-unit at the generator. Likewise, it is preferred to use at least one inventive connection means in order to build a respective stator-rotor-segment-unit. The stator-rotor-segment-unit is demounted from the generator. Again, respective hoisting means may be used to demount the stator-rotor-segment-unit from the generator, i. e. respective structural components of the generator.

Hence, the inventive method provides an easy way to mount or demount a generator or respective parts of a generator. The inventive stator-rotor-segment-unit is comparatively easy to handle both at and outside of the generator.

The inventive method is both applicable for generators with outer stator - inner rotor and outer rotor - inner stator configuration. Generally, all respective explanations concerning the inventive generator assembly also apply for the inventive method.

Thus, it is preferred that the used radially oppositely disposed rotor and stator segments each comprise at least one reception portion for detachably receiving at least one connection means, with the connection means being adapted to detachably connect the respective radially oppositely disposed rotor and stator segments.

It is advisable that the respective stator-rotor-segment-units are disposed in a service position for mounting or demounting. The service position is a definite position of the components of a generator or a generator itself which allows easy mounting or demounting of respective stator-rotor-segment-units and/or stator segments and/or rotor segments. It is possible that the stator and the rotor may be simultaneously or separately moved to the service position.

Preferably, the rotor is locked against rotation while performing mounting or demounting of stator-rotor-segment-units at the generator. In such a manner, respective mounting or demounting works may be safely and properly executed.

In the following, the invention is described in detail as reference is made to the figures, whereby:
- fig. 1: shows a principle partial view of a wind turbine;
- fig. 2: shows a principle cut-view along line II-II in fig. 1;
- fig. 3: shows a principle view of a generator assembly according to an exemplary embodiment of the invention;

- fig. 4: shows a principle view of a generator assembly according to an exemplary embodiment of the invention;
- fig. 5: shows a principle view of a generator assembly according to an exemplary embodiment of the invention;
- fig. 6: shows a principle view of an inventive stator-rotor-segment-unit according to an exemplary embodiment of the invention;
- fig. 7: shows a principle view of a generator assembly according to an exemplary embodiment of the invention; and
- fig. 8: shows a principle view of an inventive stator-rotor-segment-unit according to an exemplary embodiment of the invention.

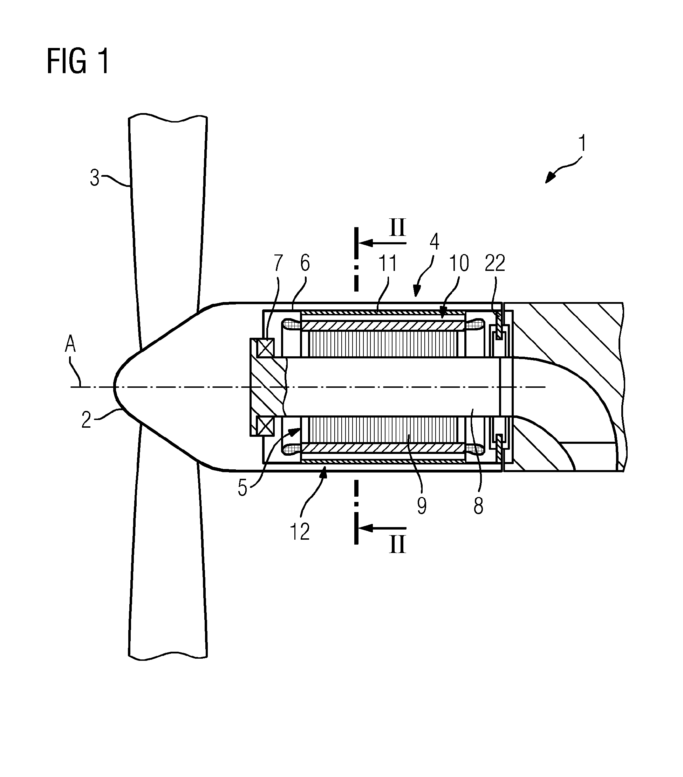

Fig. 1 shows a principle cut partial view of a wind turbine 1. The wind turbine 1 is a direct-drive wind turbine ready to be used for offshore applications and comprises a rotatable rotor hub 2 having a number of rotor blades 3 attached thereto. The rotor hub 2 is adapted to transfer rotational movements to a rotor 4. The rotor 4 is rotatably supported relative to a stator 5. Therefore, the rotor frame 6 supporting the rotor 4 is supported on respective bearings 7 disposed on a non-rotatable shaft 8, whereby the stator 5 is supported on a stator frame 9. The stator frame 9 is directly supported on the central shaft 8.

In known manner, an air-gap 10 extends between the stator 5 and the rotor 4, i. e. permanent magnets 11 of the rotor 4. The radial dimensions of the air-gap 10 are ca. 6 mm. Both stator 5 and rotor 4 build the power generating unit, i. e. generator 12 of the wind turbine 1. The generator 12 has an outer rotor 4 - inner stator 5 configuration. The centre axis of the generator 12 is denoted as A.

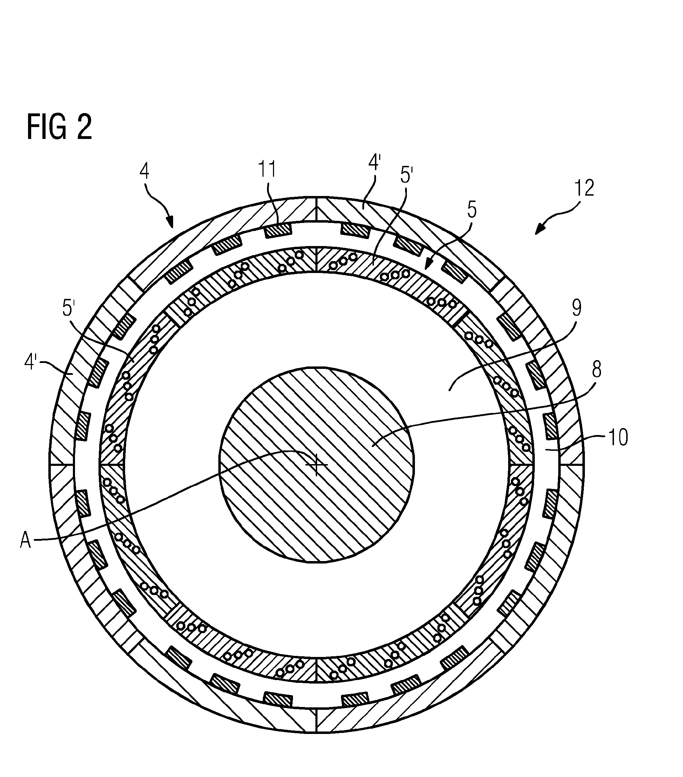

As is discernible from fig. 2 showing a principle cut-view along line II-II in fig. 1, both the stator 5 and the rotor 4 are circumferentially segmented, i. e. comprise circumferentially disposed, ring-segment-like shaped stator segments 5' and rotor segments 4'. The rotor segments 4' each hold a number of permanent magnets 11 on their stator facing side. The rotor segments 4' are fixed to one another, a rotor brake disc 22, and the rotor hub 2. The stator segments 5' each hold a number of stator windings. The stator segments 5' are fixed to one another and to the stator frame 9. Segmenting the stator 5 and the rotor 4 provides advantages regarding assembly and/or disassembly of the generator 12 and the wind turbine 1 as a whole.

A lifting means such as a crane or the like may be provided with the wind turbine 1, i.e. the nacelle of the wind turbine 1. The lifting means serves for handling of respective components of the wind turbine 1 and/or particularly the generator 12, i.e. respective rotor segments 4' and/or stator segments 5'.

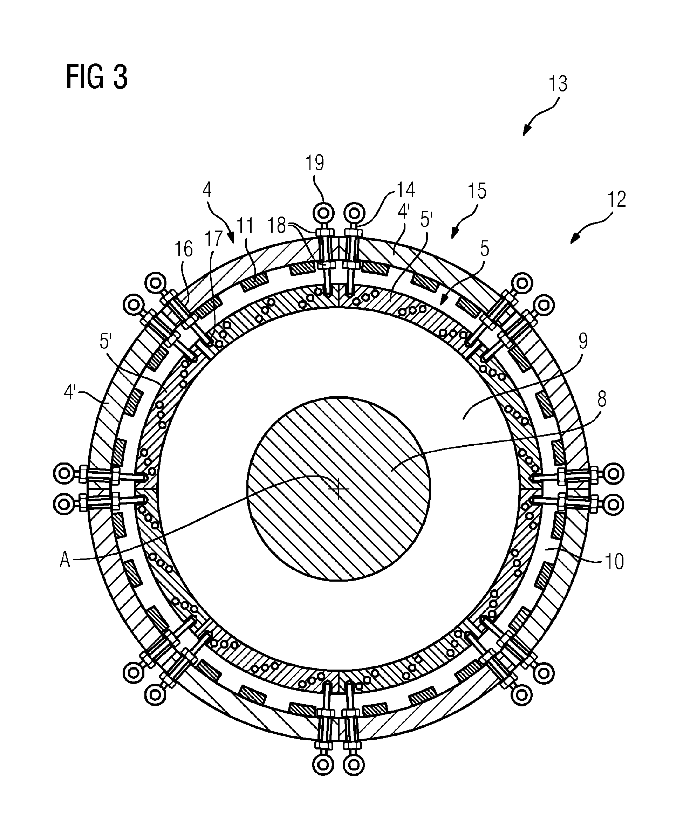

The inventive principle is explained with reference to fig. 3 showing a principle frontal view of an inventive generator assembly 13 according to an exemplary embodiment of the invention. Thereby, the generator 12 is not operating, i. e., the rotor 4 is not rotating.

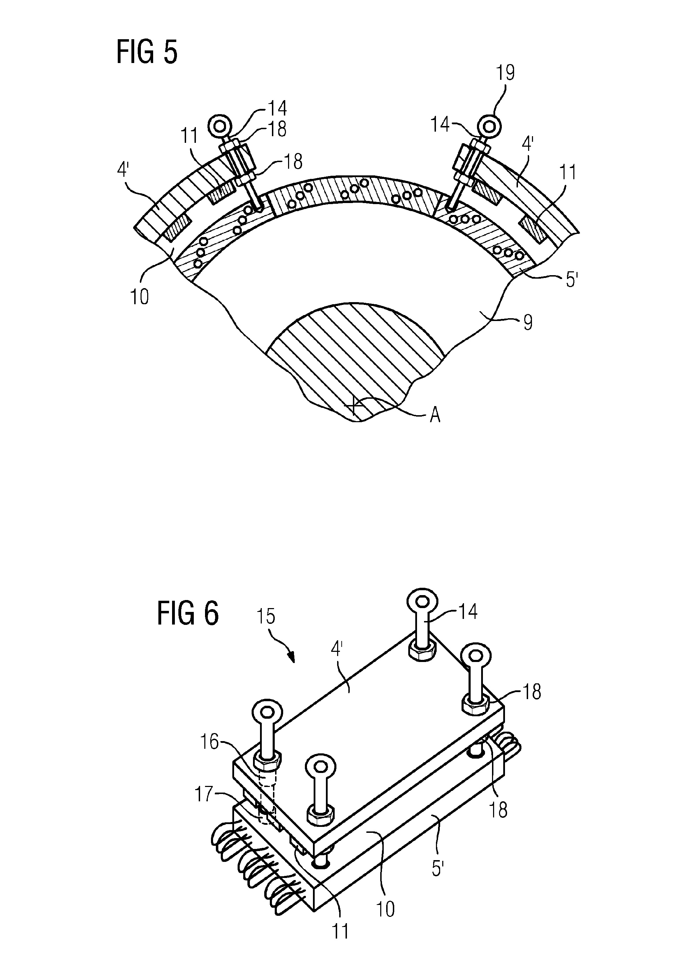

As is discernible, radially oppositely disposed rotor and stator segments 4', 5' are connected by respective connection means in the shape of at least partially threaded bolts 14 made of non-ferromagnetic austenitic steel so as to build detachable stator-rotor-segment-units 15 (cf. fig. 6). Thereby, a respective stator-rotor-segment-unit 15 comprises a respective stator segment 5' and a respective radially oppositely disposed rotor segment 4' in terms of a pair. Thus, the respective stator-rotor-segment-units 15 are built by a detachable or temporary screw fitting. As can be seen, respective end windings axially extend off the stator segment 5ʹ.

As is discernible from fig. 6, the bolts 14 are placed in four corners of the rotor segments 4' and/or stator segments 5'. The stator-rotor-segment-unit 15 as depicted in fig. 6 can be feasible for transportation and on site assembly.

By means of the screw fitting, respective loosened stator segments 5' may be pulled off the stator frame 9 in radially outward direction, i.e. towards the rotor 4. A slit or gap exists between the circumferentially adjacently disposed stator segments 5' and a radial gap may be built between the stator segments 5' and the stator frame 9 while the stator segments 5' are mechanically coupled to the rotor 4 or respective rotor segments 4', respectively.

The stator-rotor-segment-units 15 keep the air-gap 10 constant. It is possible, that the air-gap 10 may be altered by means of the screw fitting, ie by fastening or loosening of the screw fitting. Further, the stator-rotor-segment-units 15 avoid or reduce mechanical stress or deformation within the respective ring section of the rotor 4.

Respective stator segments 5' can be turned together with the rotor 4 to an easy service position, where a lifting means can easily access or from where a respective stator-rotor-segment-unit 15 may be attached to a rope of a winch or the like in order to be lowered towards the earth or sea surface. The respective stator segments 5' and rotor segments 4' of the generator 12 comprise respective reception portions in the shape of threaded through bores 16 (cf. rotor segments 4') and blind bores 17 (cf. stator segments 5'). Hence, in order to build respective stator-rotor-segment-units 15, the bolt 14 penetrates a through bore 16 of a rotor segment 4', the air-gap 10 and ends in a threaded blind bore 17 of a respective oppositely disposed stator segment 5' (cf. also fig. 6).

In order to establish a connection with an external or internal lifting means or hoisting means (not shown) such as a crane or the like, the radial outer ends of the bolts 14 comprise a hook-like shaped connecting portion 19 adapted to be connected with a corresponding connecting portion of a hoisting means.

Spacers in the shape of non-ferromagnetic austenitic steel nuts 18 are provided on the outer and inner face of respective rotor segments 4' so as to keep the air-gap 10 between the radially oppositely disposed stator segments 5' and rotor segments 4' constant even after building the respective stator-rotor-segment-unit 15. Aside, the nuts 18 may differ in size or maybe turned so as to modify or adjust the air-gap 10.

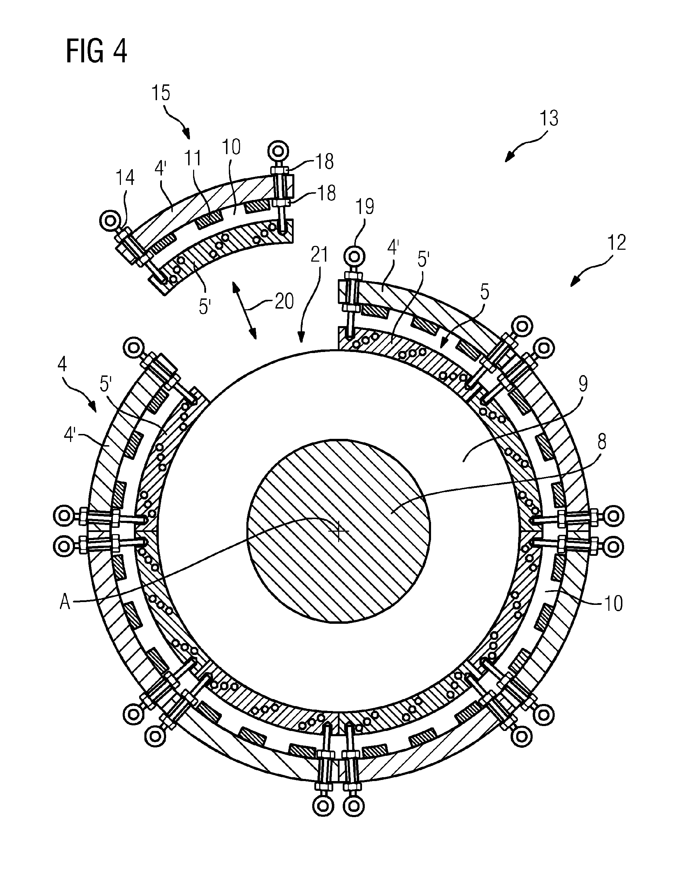

Fig. 4 shows a generator assembly 13 in another configuration, i. e. a respective stator-rotor-segment-unit 15 has been demounted from the generator 12 (cf. arrow 20) after the generator 12 has been brought into a service position. Hence, a circumferential gap 21 is temporarily built. This configuration of the generator 12 usually leads to structural stresses within the stator 5 and rotor 4, i. e. within the mounted stator segments 5' and rotor segments 4'.

The structural stresses may influence the radial dimensions of the air-gap 10 and may even lead to mechanical deformation of the stator 5 and/or rotor 4 since the mechanically stabilising ring-like shape of the generator 12 is temporarily interrupted.

However, when respective stator segments 5' and rotor segments 4' circumferentially adjacently disposed to the gap 21 are also connected with each other by means of respective bolts 14 penetrating the rotor segments 4', the air-gap 10, and into the stator segments 5' connected to the stator frame 9, i. e. connected to build respective stator-rotor-segment-units 15, mechanical loads on both the stator 5 and the rotor 4 may be essentially reduced since the stator-rotor-segment-unit 15 hold the stator segments 5' and rotor segments 4' in a spatially defined relationship, i. e. particularly the air-gap 10 may be maintained.

The same effect may be accomplished when only a rotor segment 4' (cf. fig. 5) or a stator segment 5' is removed from the generator 12. As is discernible from fig. 5, a first nut 18 is disposed on the radial outer surface of the rotor segment 4' and a second nut 18 is disposed on the radial inner surface of the rotor segment 4' keeping the air-gap 10 constant. Aside, mechanical stresses and/or mechanical deformations within the rotor 4 are reduced or avoided, respectively. The screw fitting, ie the bolt 14 further acts as a means against rotation of the rotor 4. As already mentioned, it is possible that the air-gap 10 may be altered by means of the screw fitting, ie by fastening or loosening of the screw fitting, i.e. the bolt 14, or changing the radial dimensions (height) of the nuts 18.

Likewise, even when removing only a part of a stator segment 5' or rotor segment 4', i. e. a permanent magnet 11 for instance, the inventively provided stator-rotor-segment-unit 15 provides mechanical and dimensional stability of both the stator 5 and the rotor 4, i. e. the entire generator 12. Thus, problems with refitting of respective permanent magnets 11 or other components of the generator 12 are encountered.

Hence, when a stator segment 5' has to be removed, the radially outside oppositely positioned rotor segment 4' has to be removed as well. It can be crucial to assure that the remaining stator segments 5' hold onto the stator frame 9 or another support structure to maintain structural stability and avoid the mentioned mechanical stresses or deformation. Even without taking out a whole rotor segment 4' and/or stator segment 5', i.e. when only taking out at least one part of a rotor segment 4' and/or a stator segment 5' such as a permanent magnet 11 for instance, the provision of respective stator-rotor-segment-units 15 may avoid problems with refitting of the respective parts taken out as the coupling of the generator 12 with the bolt 14 ensures a rigid structure.

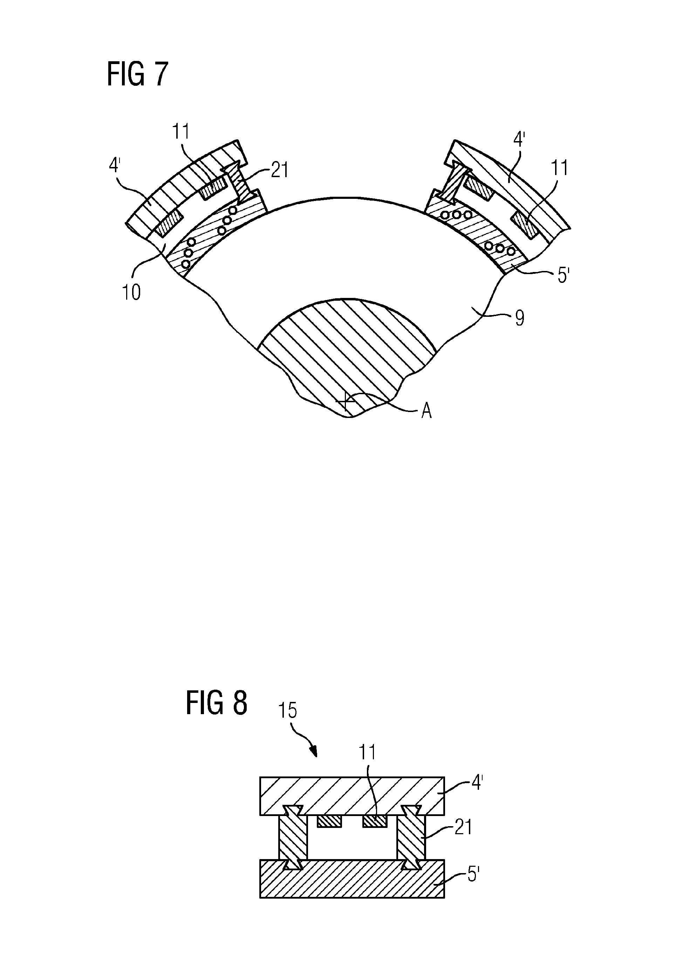

Fig. 7, 8 show an alternative embodiment of an inventive generator assembly 13. Thereby, the connection principle of respective radially oppositely disposed stator segments 5' and rotor segments 4' is not based on a detachable screw fitting, but on a detachable form closure fitting. Hence, the connection means is provided as a longitudinal component in the shape of a rod 21 or profile, which rod 21 axially extends in the air-gap 10 between respective radially oppositely disposed stator segments 5'and rotor segments 4'. Thereby, the stator segments 5' and rotor segments 4' comprise respective dove-tail like recesses, whereas the rod 21 comprises respective correspondingly shaped dove-tail like protrusions. Hence, according to this embodiment, respective stator-rotor-segment-units 15 (cf. fig. 8) are built by axially inserting or sliding respective rods 21 between respective radially oppositely disposed stator segments 5' and rotor segments 4'.

Although not shown in the figures, the connection of the radially oppositely disposed stator segments 5' and rotor segments 4' or respective rotor and/or stator segments 4', 5' with respective structural components of the generator 12 may also be provided by a bayonet fitting. In this case, the connection means comprises a bolt having at least one radial projection, wherein the reception portion of the rotor and/or stator segment 4', 5' and/or the structural component of the generator 12 comprise a first section extending in radial direction and a second section perpendicularly extending from the first section.

The inventive matter allows an easy mounting or demounting of the stator 5 and/or rotor 4 or parts of the stator 5 and/or the rotor 4 of a segmented generator 12 as shown in fig. 3 for instance. Hence, an inventively provided method for demounting or demounting the stator and/or rotor or respective parts of the stator and/or rotor of a generator 12 comprises the steps of detachably connecting radially oppositely disposed rotor and stator segments 4', 5' with each other to build a stator-rotor-segment-unit 15 outside of the generator 12, mounting the stator-rotor-segment-unit 15 to the generator 12, disconnecting the stator-rotor-segment-unit 15 mounted with the generator 12, and mounting the stator segments 5ʹ and/or rotor segments 4' to respective structural components of the generator 12.

Alternatively, the inventive method comprises the steps of detachably connecting radially oppositely disposed rotor segments 4' and stator segments 5' with each other to build a stator-rotor-segment-unit 15 at the generator 12 and demounting the stator-rotor-segment-unit 15 from the generator 12.

It is preferred that the respective stator-rotor-segment-units 15 are disposed in a service position for mounting or demounting. After building respective stator-rotor-segment-units 15 at the generator 12, detaching the stator segments 5' and/or rotor segments 4' from the structural component of the generator 12 is performed. Preferably, the rotor 4 is locked against rotation while performing mounting or demounting of respective stator-rotor-segment-units 15 at the generator 12.

Although the present invention has been described in detail with reference to the preferred embodiment, the present invention is not limited by the disclosed examples from which the skilled person is able to derive other variations without departing from the scope of the invention.

## Claims

1. Generator assembly (13), particularly for a wind turbine (1), having a generator (12) with a segmented rotor (4) comprising a number of rotor segments (4') and a segmented stator (5) comprising a number of stator segments (5'), wherein radially oppositely disposed rotor and stator segments (4', 5') each comprise at least one reception portion for detachably receiving at least one connection means, with the connection means being adapted to detachably mechanically connect respective radially oppositely disposed rotor and stator segments (4', 5') to build stator-rotor-segment-units (15).

2. Generator assembly according to claim 1, wherein additionally, the connection means is adapted to detachably connect a respective rotor and/or stator segment (4', 5') or a respective stator-rotor-segment-unit (15) to a structural component of the generator (12), with the structural component of the generator (12) comprising at least one respective reception portion for detachably receiving at least one connection means.

3. Generator assembly according to claim 1 or 2, wherein the connection of the radially oppositely disposed rotor and stator segments (4', 5') or the rotor and/or stator segment (4', 5') with a structural component of the generator (12) is provided by a screw fitting.

4. Generator assembly according to claim 3, wherein the connection means comprises an at least partially threaded bolt (14), whereby the reception portion of the rotor and/or stator segment (4', 5') and/or the structural component of the generator (12) is provided by at least one, particularly at least partially threaded, bore (16, 17) adapted to receive the bolt (14).

5. Generator assembly according to claim 4, wherein the connection means further comprises at least one nut (18) adapted to adjust or keep an air-gap (10) between the respective radially oppositely disposed stator and rotor segments (4ʹ, 5ʹ).

6. Generator assembly according to claim 4 or 5, wherein the bolt (14) penetrates a through-bore (16) of the rotor or stator segment (4', 5') ending in a threaded blind-bore (17) of the respective oppositely disposed rotor or stator segment (4', 5ʹ) or the bolt (14) penetrates a through-bore (16) of the rotor or stator segment (4', 5') and further penetrates a through-bore (16) of the respective oppositely disposed stator or rotor segment (4', 5') ending in a blind-bore (17) of the structural component of the generator (12) or the bolt (14) penetrates a through-bore (16) of the rotor or stator segment (4', 5') ending in a blind-bore (17) of the structural component of the generator (12).

7. Generator assembly according to one of the preceding claims, wherein the connection of the radially oppositely disposed rotor and stator segments (4', 5') or the rotor and/or stator segment (4', 5') with a structural component of the generator (12) is provided by a bayonet fitting.

8. Generator assembly according to claim 7, wherein the connection means comprises a bolt having at least one radial projection, wherein the reception portion of the rotor and/or stator segment (4', 5') and/or the structural component of the generator (12) comprises a first radially extending section and a second section perpendicularly extending from the first section.

9. Generator assembly according to one of the claims 4 to 8, wherein the bolt (14) comprises a connecting portion (19) adapted to be connected with a corresponding connecting portion of a hoisting means.

10. Generator assembly according to one of the preceding claims, wherein the connection of the radially oppositely disposed rotor and stator segments (4', 5') is provided by a form closure fitting.

11. Generator assembly according to claim 10, wherein the connection means is provided by a longitudinal component axially extendable or extending in the air-gap (10) between respective radially oppositely disposed rotor and stator segments (4ʹ, 5ʹ), with the connection means having at least one radially extending protrusion or recess, whereby the reception portion of the respective rotor and/or stator segments (4', 5ʹ) is provided as a corresponding radially extending protrusion and/or recess.

12. Generator assembly according to one of the preceding claims, wherein the connection means is made of a non-magnetic or non-magnetisable material.

13. Method for mounting or demounting the rotor (4) and/or stator (5) or parts of the rotor (4) and/or stator (5) of a generator (12) having a segmented rotor (4) comprising a number of rotor segments (4') and a segmented stator (5) comprising a number of stator segments (5'), comprising the steps of:
- detachably connecting rotor and stator segments (4', 5') with each other to build a stator-rotor-segment-unit (15) comprising radially oppositely disposed stator and rotor segments (4ʹ, 5ʹ) outside of the generator (12), mounting the stator-rotor-segment-unit (15) to the generator (12), disconnecting the stator-rotor-segment-unit (15) mounted with the generator (12), or
- detachably connecting radially oppositely disposed rotor and stator segments (4', 5') with each other to build a stator-rotor-segment-unit (15) at the generator (12) and demounting the stator-rotor-segment-unit (15) from the generator (12).

14. Method according to claim 13, wherein the used radially oppositely disposed rotor and stator segments (4', 5') each comprise at least one reception portion for detachably receiving at least one connection means, with the connection means being adapted to detachably connect the respective radially oppositely disposed rotor and stator segments (4', 5ʹ).

15. Method according to claim 13 or 14, wherein the respective stator-rotor-segment-units (15) are disposed in a service position for mounting or demounting.
